# EUROPEAN PATENT APPLICATION

(11) **EP 1 235 055 A1**
(43) Date of publication of application: **28.08.2002**
(21) Application number: 01500163.9
(22) Date of filing: 29.06.2001
(51) Int. Cl.: G01D 5/39, G01D 4/00, G01D 21/02

(54) **System for remote management of water consumption**

(30) Priority: 26.02.2001 ES 200100449
(71) Applicant: Empresa Municipal de Aguas Y Saneamientos de Murcia, S.A., 30008 Murcia (ES); Ingenieria Tecnologica y Servicios del Agua y Medioambiente, S.L., 30008 Murcia (ES)
(72) Inventor: Sandoval Moreno, David Joaquin, Plaza Circular, 9 30008 Murcia (ES); Carrillo Hernández, Antonio Andres, Plaza Circular, 9 30008 Murcia (ES); Lopez Garcia, Esperanza Ma., Plaza Circular, 9 30008 Murcia (ES)
(74) Representative: Maldonado Jordan, Julia

(57) **Abstract**

The system is based on incorporating an electronic counter (2) and an electrovalve (3) to each customer's private installation. These are intercalated in the water supply tube (6) and associated to a control card (4), so that this card (4) reads the electronic counter (2) on a permanent basis, transmitting this information to a central data system. The card also receives instructions from the data system to control the electrovalve (3), allowing it to be remotely opened and closed. This system allows remote reading, giving detailed information on instantaneous consumption over time and periodical consumption for the purpose of invoicing. It also allows remote supply disconnection, to avoid leakage, fraud, non-payment, etc.

## Description

### OBJECT OF THE INVENTION

The present invention refers to a remote management system, allowing us to know both the amount of water consumed in a given period and the instantaneous consumption at any moment.

Therefore, the object of the invention is, on the one hand, to be able to "read the counter" remotely from a central data system and on the other, to be able to detect involuntary consumption, for example, due to leakage, also remotely and if necessary, to disconnect the water supply.

Consequently, the system is intended to allow the municipal water management services to carry out a wider, more efficient management.

### BACKGROUND TO THE INVENTION

Drinking water consumption is currently measured by workers who travel to homes or industries and take note of the consumption reading on the respective counters. The differences between the procedures adopted by various parties are irrelevant. The municipal water supply companies are therefore obliged to employ readers to carry out this work.

With the aim of minimising this problem, the readings are taken every two or three months, thereby reducing the frequency of the visits. Another alternative is used in the case of new blocks of flats, where the municipal water supply services install a single counter for the whole building and later charge the water bill to the residents' committee as a whole. This last solution, far from solving the problem, means that the residents' committee must hire and pay the services of a company to take the readings. Furthermore, when one of the residents refuses to pay, the committee is not legally entitled to disconnect the water supply, as the municipal bodies would be. The rest of the residents are therefore obliged to pay for the water consumption of those who refuse to pay their part.

Another problem is the physical impossibility of making a simultaneous reading for all the customers corresponding to the same route or sector. It is also practically impossible for the customer to closely monitor his counter on a regular basis. This all means it is impossible to produce statistical data, which is very important in consumption management.

Finally and in the event of a possible water leakage in a customer's private installation, the water supply entity is not able to detect the problem. The only means of control they have is to study the amount of water consumed at the end of the reading period. It is not possible to report the problem to avoid the water loss, which can sometimes be a very important issue.

### DESCRIPTION OF THE INVENTION

The remote management system proposed by the invention is a fully satisfactory solution to the aforementioned problems, in each of the different aspects, ensuring instantaneous control of the water consumption, with the following advantages, among others:
- The consumption is measured for invoicing without the need to send an employee to the customers' homes or industries.
- The water supply can be remotely disconnected, in order to avoid leakage, fraud, non-payment, etc.
- Detailed knowledge about instantaneous consumption over time.
- Knowledge of consumption for invoicing in periods which may be configured for each home or industry.
- Simultaneous invoicing for all the counters, allowing all the customers in any one sector to be invoiced at equal intervals.
- Possibility to set invoice time intervals and therefore, to determine the consumption at various times.
- Possibility to hire fixed volumes and pay for them in advance.
- Reduction of invoice-invoicing-payment cycle.
- Pressure adjustment according to the real water demand.
- It is possible to prepare maps illustrating hourly consumption.
- Knowledge about customer consumption habits.
- Detection of leakage and faults in customer's installations.

To this end and more specifically, the system is structured and based on sets of individual control equipment for each customer. The equipment consists of an electronic counter, an electrovalve and a control card, allowing the electrovalve and the counter reading to be managed. This control equipment forms associated groups by means of a concentrator. For example, there may be one concentrator for each block of flats. The concentrator consists of a small industrial computer with a communication adapter, enabling it to be connected to each and every individual control equipment. It also has another communication adapter, to be connected to a central data system, to which all the various concentrators will be connected, by means of any currently available communication system, for example, via telephone wire or wireless telephone systems, local area network, radio, optic link, etc. Therefore, the aforementioned data system shall always have information corresponding to each customer, by means of its individual control equipment. It is also possible to remotely control whether the electrovalve is opened or closed and consequently, whether the supply is connected or not.

### DESCRIPTION OF DRAWINGS

In order to complement the present description and with the aim of allowing a better understanding of the characteristics of the invention, in accordance with an example of the preferred embodiment of same, a set of drawings is included as an integral part of the aforementioned description. These drawings are of an illustrative and non-restrictive nature and represent the following:
Figure 1. - Outlines a remote management system for water consumption in homes and industries, in accordance with the object of the present invention.

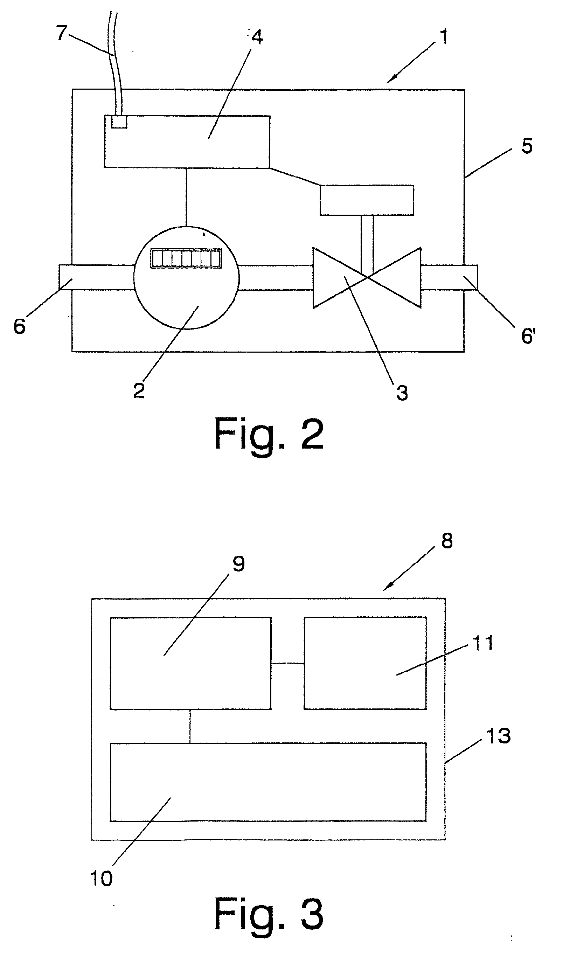

Figure 2. - Shows a close-up representation of one of the sets of individual control equipment participating in the system shown in the previous figure.
Figure 3. - Shows a close-up representation of one of the concentrators also participating in the system shown in figure 1.

### PREFERRED EMBODIMENT OF THE INVENTION

From the figures, we can see that the management system for water consumption proposed by this invention is based on the installation, for each customer, of a set of individual control equipment (1) comprised by an electronic counter (2) and an electrovalve (3), where these elements (2) and (3) are assisted by an electronic control card (4), so that it is possible to act upon the electrovalve (3), opening and closing same, and that it is also able to read the electronic counter on a permanent basis. (2)

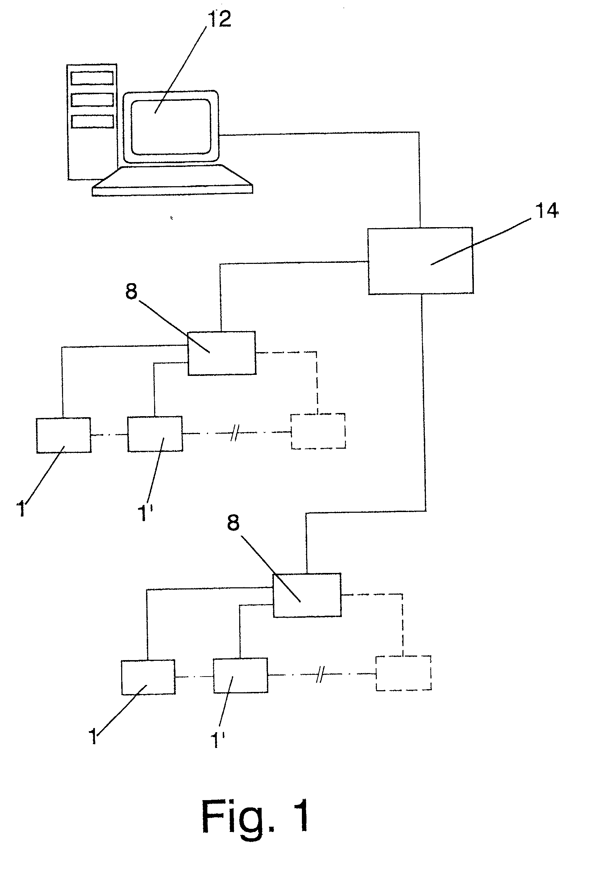

From a practical point of view, the individual control equipment (1) shall be enclosed in a box (5) with connection sockets (6-6') for the entrance and exit of water, and with access for a communications cable (7) which connects the control card (4) to a concentrator (8), so that several sets of individual control equipment (1- 1'...), such as those corresponding to a building, shall be associated to the same concentrator (8), as may be seen in figure 1.

Each concentrator (8) shall be structured by an industrial computer (9) assisted by a communications adapter (10) for the sets of individual control equipment (1), which is obviously intended to receive a communications cable (7), and by a second communications adapter (11), in this case to establish communication with the concentrator (8) and a central data system (12), where the components of each concentrator (8) are also placed inside a protection box (13).

The various concentrators (8 - 8') may be connected to the central data system (12) by any suitable means of communication (14), such as by an ETHERNET network, by FSK radio, RTC, GSM or UMTS, optic link, etc., whereas the most appropriate system may be chosen in each case.

## Claims

1. This is a remote system for managing water consumption in homes and industries. It aims to provide the municipal water supply services with remote instantaneous information on each customer's water consumption. It also allows the aforementioned supply to be remotely disconnected. It is composed of several sets of individual control equipment (1), one for each customer, comprised by an electronic counter (2), an electrovalve (3) and a control card (4). The aforementioned sets of individual equipment (1-1') form groups. In these groups, the various individual sets of equipment (1) are associated to a concentrator (8), comprised of an industrial computer (9), assisted by a communications adapter (10) to be connected to the various individual sets of control equipment (1-1') and a second communications adapter (11), by which it is connected to a central data system (12), by means of any communication system (14), be it conventional, telephone, radio or other system. Therefore, the central data system (12) receives information on each and every one of the electronic counters (2) and it is possible to act upon each and every one of the electrovalves (3), opening and closing them remotely from the central data system.
